# EUROPÄISCHE PATENTSCHRIFT

(11) **EP 2 522 228 B1**
(45) Veröffentlichungstag und Bekanntmachung des Hinweises auf die Patenterteilung: **19.02.2014**
(21) Anmeldenummer: 11165807.6
(22) Anmeldetag: 12.05.2011
(51) Int. Cl.: A23G 1/00, A23G 1/18

(54) **Vorrichtung sowie Verfahren zum batchweisen Herstellen von auf einem pflanzlichen Fett basierten Impfkristallsuspensionen**
Device and method for producing seed crystal suspensions based on a vegetable fat in batches
Dispositif et procédé de fabrication par lots de suspensions de cristaux germes à base de graisse végétale

(43) Veröffentlichungstag der Anmeldung: 14.11.2012
(73) Patentinhaber: Bühler AG, 9240 Uzwil (CH)
(72) Erfinder: Zeng, Yuantong, 9240 Uzwil (CH); Bauer, Bernhard, 9242 Oberuzwil (CH); Bühler, Leo, 8820 Wädenswil (CH)
(74) Vertreter: Hepp Wenger Ryffel AG

(56) Entgegenhaltungen:
- EP-A1- 2 140 766
- EP-A1- 2 319 328
- EP-A2- 0 033 718
- WO-A1-00/72695
- DE-A1- 2 602 877
- DE-B- 1 145 468
- DE-T2- 60 313 210
- US-A- 4 594 194
- ANDREW G. F. STAPLEY ET AL: "The effects of shear and temperature history on the crystallization of chocolate", JOURNAL OF THE AMERICAN OIL CHEMISTS' SOCIETY, Bd. 76, Nr. 6, 1. Juni 1999 (1999-06-01), Seiten 677-685, XP55009613, ISSN: 0003-021X, DOI: 10.1007/s11746-999-0159-3
- DEBASTE F ET AL: "Contribution to the modelling of chocolate tempering process", JOURNAL OF FOOD ENGINEERING, BARKING, ESSEX, GB, Bd. 88, Nr. 4, 1. Oktober 2008 (2008-10-01), Seiten 568-575, XP022670521, ISSN: 0260-8774, DOI: 10.1016/J.JFOODENG.2008.03.019 [gefunden am 2008-03-26]

## Beschreibung

Die vorliegende Erfindung bezieht sich auf eine Vorrichtung sowie einem Verfahren zum batchweisen Herstellen von auf einem pflanzlichen Fett basierten Impfkristallsuspensionen, insbesondere zur Erzeugung stabiler mikrodisperser KakaobutterKristallsuspensionen mit einem hohen Anteil an Kakaobutter β _{VI}-Kristallen gemäss dem Oberbegriff der unabhängigen Ansprüche.

In der konventionellen Herstellung von Schokolade und schokoladeähnlichen Massen wird in einem sogenannten Vorkristallisationsschritt eine hinreichende grosse Anzahl an Fettkristallkeimen, welche nach dem Ausformen bzw. Vergiessen der Massen im anschliessenden Abkühlprozess die weitergehende Verfestigungskristallisation initiieren, hergestellt. Dabei ist es besonders wichtig, dass die im Vorkristallisationsschritt erzeugten Kristalle in einer gewünschten stabilen Kristallmodifikation vorliegen. Im Falle von Kakaobutter sind dies die sogenannten β_{V} und β _{VI}-Kristallformen. In diesen Kristallformen sind die hauptsächlichen Triglyceride der Kakaobutter in einem triklinen Kristallgitter angeordnet. Ferner existieren bei der Kakaobutter auch instabile Kristallformen wie die amorphe γ-, hexagonale α- und die orthorhombische β_{IV}-Kristallstrukturen.

Je höher der Anteil der stabilen Kristallstrukturen in der Kakaobutter, desto weniger werden Fremdfette, wie beispielsweise Milchfett, während der Lagerung der Schokolade oder schokoladeähnlichen Masse an die Oberfläche migrieren. Die an die Oberfläche migrierten Fremdfette bilden auf der Schokolade oder der schokoladenähnlichen Masse einen weisslichen Belag, welcher von Konsumenten als ein Zeichen von fehlender Frische, vor allem, weil er an weissen Schimmelpilz erinnert, gehalten wird. Daher ist es bei der Herstellung von Schokolade oder schokoladenartigen Massen wichtig, einen ausreichend hohen Anteil an stabilen Kakaobutterkristallen zu erhalten, damit die Bildung dieses sogenannten "Fettreifs" möglichst verhindert wird. Ausserdem bewirkt ein hoher Anteil an stabilen Kakaobutterkristallen ein dichtes und stabiles Gefüge der Schokolade oder schokoladenartigen Masse, welche in der Folge einen knackigen Bruch aufweist.

Bei der traditionellen Schokoladenherstellung wird die Schokoladenmasse in Wärmetauschern unterkühlt, wobei sich mehrere Kakaobutterkristallformen bilden. Anschliessend wird die Masse gezielt auf eine spezifische Temperatur erwärmt, bei der die instabilen γ-, α- und β_{IV}-Kristallstrukturen wieder aufschmelzen. Diese traditionelle Unterkühlmethode ist jedoch aufwändig, heikel und unflexibel.

Eine weitere Möglichkeit, einen möglichst hohen Anteil an stabilen Kakaobutterkristallen in der Schokolade- oder schokoladenähnlichen Masse zu erreichen besteht darin, die Masse vor dem Abkühlen mit Keimkristallen, welche die gewünschten stabilen Kristallformen aufweisen, anzuimpfen.

Aus der WO 98/30108 ist ein Verfahren zur Vorkristallisation von Schokolade bekannt, bei welchem die Produktschmelze mit einem Kristallpulver direkt angeimpft wird. Nachteilig an diesem Verfahren ist, dass eine exakte Dosierung von Fettkristallpulvern schwierig ist und ein relativ hoher Einsatz an Impfkristallen in einer Schokolade oder schokoladenähnlichen Masse erfordert. Ausserdem lassen sich mit diesem Verfahren nur relativ grosse Fettkristallpartikel von ca. 20 - 200 µm herstellen, was eine relativ geringe Kristallkeimzahldichte pro Volumen des Pulvers ergibt.

Die EP 1 180 941 offenbart ein kontinuierliches Verfahren zur Herstellung von Fettschmelze basierten Impfkristallsuspensionen. Die Verwendung von Impfkristallsuspensionen hat gegenüber dem Einsatz von Impfkristallpulvern wesentliche Vorteile, da diese einen sehr hohen Anteil an stabilen Kakaobutterkristallstrukturen aufweisen und die Erzeugung relativ kleiner Impfkristalle ermöglicht. Ausserdem lassen sich Impfkristallsuspensionen in den flüssigen Schokolade- oder schokoladeähnlichen Massen besser eindosieren.

Nachteilig an diesem Verfahren ist jedoch, dass nur eine kontinuierliche Herstellung und Zugabe der Impfkristallsuspension möglich ist. Die Verwendung eines solchen Verfahrens ist daher nur bei der Herstellung grösserer Schokoladenmengen, wie beispielsweise in Schokoladefabriken, ermöglicht. Ausserdem wird zur Ausführung dieses Verfahrens eine relativ grosse Anlage benötigt, welche unter anderem über einen Sprühturm verfügt.

Aus der Druckschrift EP 2 319 328 ist ein Verfahren bekannt, bei welchem kakaobutterhaltige Masse temperiert wird. Die Masse wird in einem zylinderförmigen Tank gehalten und auf Temperaturen von über 30 °C geheizt. In dem Tank sind ein Kratzwerkzeug und ein Flügelrad angeordnet, wobei das Flügelrad für eine axiale Strömung sorgt. Es sind also zwei Werkzeuge notwendig um die Masse in eine ausreichende Scher- und/oder Dehnströmung zu versetzen.

Ein Verfahren zum Herstelle von pulverkristallisierten Partikeln ist in der Druckschrift DE 603 13 210 offenbart. Das Verfahren wird mit zwei zylindrischen Reaktoren durchgeführt, die mit einem Heizmittel temperiert werden. Der Reaktor, der die zu behandelnde Substanz enthält, verfügt über eine Scheibe und Schaufeln zum Umwälzen. Zur Bewegung und Umwälzung der Masse sind offenbar auch zwei Werkzeuge notwendig.

Die Druckschrift EP 2 140 766 zeigt eine Vorrichtung zur Herstellung einer Kristallsuspension aus Fettmasse. Die Masse wird in einem geschlossenen Behälter elektrisch auf Temperaturen von über 23 °C temperiert. Die Masse wird durch ein Rührelement rotiert, dessen Drehgeschwindigkeit einstellbar ist. Das Rührelement besteht aus einer Anzahl von Schaufelelementen die über die gesamte Länge des Behälters an einer drehbaren Achse befestigt sind. Die Masse wird also tatsächlich von einer ganzen Reihe von Werkzeugen bewegt.

Aus der Druckschrift DE 26 02 877 ist ein Verfahren zum Temperieren von kakaobutterhaltigen Schmelzmassen bekannt. Aus einem Rührwerksbehälter wird ein Teigstrom in eine Förderschnecke abgezweigt, die eine doppelte Wandung besitzt und temperierbar ist. Die Temperatur der Förderschnecke wird auf ca. 18 bis 25°C abgesenkt, sodass die darin befindliche Masse auf 29 bis 30°C gekühlt. Die Masse wird mit einem Schneckenelement durch die Förderschecke bewegt. Die Förderschnecke ist nur für ein Durchlaufverfahren geeignet, eine batchweise Verarbeitung ist nicht möglich.

Eine Aufgabe der vorliegenden Erfindung ist es daher, die Nachteile des Bekannten zu überwinden und insbesondere eine Vorrichtung zu schaffen, welche die Herstellung kleiner Mengen von Impfkristallsupsensionen ermöglicht. Diese Aufgabe wird mit einer Vorrichtung gemäss Anspruch 1 gelöst.

Die erfindungsgemässe Vorrichtung ist zum batchweisen Herstellen von auf einem pflanzlichen Fett basierten Impfkristallsuspensionen geeignet. Insbesondere eignet sich die Vorrichtung zur Erzeugung stabiler mikrodisperser Kakaobutterkristallsuspensionen mit einem hohen Anteil an Kakaobutter β_{IV}-Kristallen. Die Vorrichtung umfasst einen vorzugsweise verschliessbaren Behälter mit einem zur Aufnahme der Fettmasse geeigneten Innenraum. Ferner verfügt die Vorrichtung über mindestens ein Temperierelement zum temperieren des Behälters auf eine bestimmte oder bestimmbare Temperatur. Insbesondere ist oder umfasst dieses mindestens eine Temperierelement ein Peltier-Element. Ferner verfügt die Vorrichtung über wenigstens ein im Innenraum des Gehäuses angeordnetes Scherelement, welches zur Erzeugung einer scher-und/oder Dehnströmung im Fett geeignet ist.

Im Gegensatz zur kontinuierlichen Herstellung von Impfkristallsuspensionen lässt sich bei einem batchweisen Herstellverfahren eine kleine, definierte Menge eine Impfkristallsuspension herstellen. Dies hat den Vorteil, dass auch bei kleinen herzustellenden Mengen von Schokolade oder schokoladeähnlichen Massen die Vorteile von Impfkristallsuspensionen verwendet werden können. Beispielsweise ermöglicht dies nun kleinen Betrieben, wie Confiserien oder Chocolaterien die Verwendung von frisch zubereiteten Impfkristallsuspensionen zur Herstellung von Schokolade vor Ort. Zudem kann eine erfindungsgemässe Vorrichtung auch zu Schulungs-und/oder Forschungszwecken verwendet werden.

Im Sinne dieser Anmeldung wird unter "batchweise Herstellung" die Herstellung einer Menge mit einem definierten Volumen verstanden. D.h. dass pro Herstellungsprozess nur eine einzelne Charge der Impfkristallsuspension hergestellt wird.

Als "hoher Gehalt" im Sinne dieser Anmeldung wird verstanden, dass ein Gehalt von über 40% vom Gesamtkristallgehalt der Fettmasse, bevorzugt von über 50%, insbesondere von über 60% an β _{IV}-Kristallen erhältlich ist.

Der Behälter ist derart ausgestaltet, dass ein im Behälter gebildeter Innenraum zur Aufnahme und Aufbewahrung des Fetts geeignet ist. Das heisst, dass der Behälter derart beschaffen ist, dass eine bestimmte Menge der pflanzlichen Fettmasse in den Behälter eingefüllt werden kann und darin für eine bestimmte Zeit aufbewahrt werden kann. Daher verfügt der Behälter vorzugsweise über entsprechende Mittel oder Anschlussmöglichkeiten, die es ermöglichen, ein pflanzliches Fett in den Innenraum zu füllen. Ferner ist der Behälter bevorzugt verschliessbar, d.h. nach dem Befüllen des Behälters können sämtliche Öffnungen, welche z.B. zum Befüllen des Innenraums benötigt werden, verschlossen werden können. Dies schützt die eingefüllte pflanzliche Fettmasse während der Herstellung und der Aufbewahrung der Impfkristallsuspension vor Verunreinigungen.

Das mindestens eine Temperierelement ist bevorzugt ein Peltier-Element. Peltier-Elemente ermöglichen ein rasches Abkühlen bzw. Aufwärmen auf eine bestimmbare Temperatur. Ferner sind Peltier-Elemente einfach im Unterhalt und können über eine entsprechende elektronische Regelung auf sehr genaue Temperaturwerte eingestellt werden. Die Temperatur zum temperieren des Behälters kann entweder durch einen Benutzer über eine geeignete Eingabevorrichtung, wie beispielsweise einer Tastatur, vorgegeben werden oder alternativ durch eine separate Reglereinheit vorgegeben werden. Das mindestens eine Temperierelement ist dabei thermisch mit dem Behälter verbunden, d.h. die Kühl- bzw. Heizleistung des mindestens einen Temperierelements wird auf den Behälter übertragen. Besonders bevorzugt kann die Vorrichtung über mehr als ein Temperierelement verfügen, insbesondere über zwei, drei, vier oder mehr Temperierelemente.

Alternativ kann eine Temperierung über mit Kühlmittel durchströmte Temperierkanäle des Behälters erfolgen.

Im Innenraum des Behälters ist ein Scherelement angeordnet, welches zur Erzeugung einer Scher- und/oder Dehnströmung im Fett geeignet ist. Die im Fett erzeugten Scher- und/oder Dehnströmungen dienen einerseits dem Mischen der Fettmasse und andererseits werden vor allem durch die austretende Dehnströmung die instabilen Kristallstrukturen durch Eintrag der mechanischen Kräfte in stabile Kristalle umgewandelt. Die entsprechenden Scher-und/oder Dehnströmungen können beispielsweise mittels eines im Innern des Gehäuses rotierenden Rotorzylinders oder durch Kammelemente oder dergleichen erzeugt werden.

Bevorzugt beträgt das Volumen des Innenraums des Behälters von 0,1 bis 10 Liter, besonders bevorzugt von 0,5 bis 5 Liter, ganz besonders bevorzugt von 1 bis 2 Liter. Die Verwendung eines relativ kleinen Behälters ermöglicht die Herstellung kleiner Mengen einer Impfkristallsuspension. Zudem reduziert ein kleines Volumen die zum Erwärmen bzw. Abkühlen der Fettmasse notwendige Zeit, was eine schnellere und somit effizientere Herstellung der Impfkristallsuspension ermöglicht.

Der Behälter ist vorzugsweise zylinderförmig. Dieser zylinderförmige Behälter weist einen Zylindermantel sowie eine Zylindergrundfläche auf. Die Grundfläche sowie der Zylindermantel sind bevorzugt dichtend miteinander verbunden, insbesondere bevorzugt sind Zylindermantel sowie Grundfläche einstückig ausgebildet. Die Grundfläche verfügt beispielsweise über eine Auslasseinrichtung, durch deren Öffnen die hergestellte Impfkristallsuspension dem Behälter entnommen werden kann. Durch eine solche Konfiguration des zylinderförmigen Behälters lässt sich eine entsprechende Menge eines pflanzlichen Fetts in den Behälter füllen und dort während des gesamten Herstellungszyklus der Impfkristallsuspension aufbewahren. Ferner bevorzugt ist die Deckfläche des zylinderförmigen Behälters verschliessbar. Dies kann beispielsweise durch einen verschliessbaren Deckel oder dergleichen ermöglicht werden.

Bevorzugt besteht der Behälter aus einem wärmeleitfähigen Material, insbesondere rostfreiem Stahl oder Aluminium. Dies ermöglicht eine homogene und effiziente Wärmeeinbringung bzw. Abkühlung des im Innern des Behälters vorhandenen Fettes. Ausserdem lassen sich rostfreier Stahl sowie Aluminium relativ einfach reinigen, was das Einhalten der entsprechenden Hygienevorschriften erleichtert.

Die Vorrichtung weist ferner bevorzugt einen Antrieb auf, der geeignet ist, das Scherelement anzutreiben. Beim Antrieb kann es sich beispielsweise um einen Elektromotor handeln, welcher über eine entsprechende mechanische Kupplung mit dem Scherelement im Innenraum verbunden ist.

Die Geschwindigkeit des Antriebs und damit der Bewegung des Scherelements ist bevorzugt einstellbar. Dies ermöglicht das Einstellen von unterschiedlich starken Scher- und/oder Dehnströmungen. Insbesondere bevorzugt ist die Geschwindigkeit des Antriebs stufenlos einstellbar. Dies kann beispielsweise über eine entsprechende Verstellung der Leistungsaufnahme eines als antrieb genutzten Elektromotors erreicht werden. Ferner könnte zur Einstellung der Antriebsgeschwindigkeit auch ein stufenlos verstellbares Getriebe verwendet werden.

Das Scherelement besteht erfindungsgemäss aus einer im Innenraum des Gehäuses in einer Richtung bewegbaren Platte mit mindestens einer Öffnung. Die mindestens eine Öffnung kann dabei eine beliebige geometrische Form aufweisen, wie beispielsweise rechteckig, quadratisch, dreieckig, gerundet oder in der Form eins beliebigen Polygons. Insbesondere bevorzugt ist die mindestens eine Öffnung als Kreis ausgebildet.

Die Ausgestaltung des Scherelements als in einer axialen Richtung bewegbaren Platte mit mindestens einer Öffnung hat den Vorteil, dass durch ein mechanisch relativ einfach zu realisierendes Hin- und Herbewegens der Platte entsprechende Scher-und/oder Dehnströmungen in der sich im Innenraum des Gehäuses befindlichen Fettmasse erzeugen lassen. Insbesondere da die Fettmasse durch die axialen Bewegungen durch die Öffnungen der Platte gepresst wird, lassen sich durch eine relativ einfache Bewegung und einem geringen Energieaufwand entsprechend hohe Scher- und/oder Dehnungsströmungen erzeugen.

Bevorzugt ist die Platte in einer Ebene, welche senkrecht zur axialen Bewegungsrichtung steht, derart geformt, dass diese den Querschnitt des Innenraums des Gehäuses in derselben Ebene entspricht. Dadurch wird erreicht, dass das sich im Innenraum des Gehäuses befindliche Fettmasse bei der axialen Bewegung der Platte durch die Öffnungen der Platte gedrückt wird und nicht zwischen der Platte und dem Gehäuse durchströmen kann oder dort eine Scherung erfährt. Dadurch werden die im Fett erzeugten Scher- und/oder Dehnströmung verstärkt. Ausserdem erfolgt dadurch eine bessere Durchmischung der Fettmasse.

Bevorzugt ist der Antrieb der Vorrichtung derart ausgestaltet, dass die Platte in der axialen Richtung in einer Hubbewegung vor und zurückbewegt werden kann. Hubbewegungen lassen sich mechanisch relativ einfach erzeugen. Ausserdem wird durch das wiederholte Hin- und Herbewegen der Platte eine zur Herstellung einer Impfkristallsuspension mit einem hohen Anteil an stabilen Kristallstrukturen erreicht. Die axiale Bewegungsrichtung der Platte entspricht dabei bevorzugt der Symmetrieachse eines zylinderförmigen Behälters.

Ferner bevorzugt ist die Platte zusätzlich in eine Drehbewegung um die axiale Bewegungsrichtung versetzbar. Die zusätzliche Drehbewegung erzeugt eine zusätzliche rotatorische Scher-Dehnströmung und vermeidet die Bildung von Klumpen innerhalb der Fettmasse. Diese zusätzliche Drehbewegung wird besonders bevorzugt durch einen zweiten Antrieb erzeugt.

Bevorzugterweise verfügt die erfindungsgemässe Vorrichtung über eine Regeleinheit, mit welcher die Temperatureinstellung beziehungsweise das zeitliche Temperaturprofil des Temperierelements und/oder die Stärke der Scher- und/oder Dehnströmung in der Fettmasse einstellbar sind. Diese Regeleinheit ermöglicht eine zentrale Steuerung der zur Herstellung einer Impfkristallsuspension relevanten Prozessparameter, wie der Temperatur sowie den auftretenden Scher- und/oder Dehnströmungen. Die Regeleinheit kann dabei durch einen Benutzer auf entsprechende Werte eingestellt werden. Zusätzlich oder alternativ kann die Regeleinheit auch mit spezifischen Temperaturen oder Temperaturverläufen sowie Scher- und/oder Dehnströmungsstärken vorprogrammiert sein. Die Stärke der Scher- und/oder Dehnströmung wird über eine Regelung des Antriebs des Scherelements eingestellt.

Ein weiterer Aspekt der vorliegenden Erfindung betrifft ein Verfahren zum batchweisen Herstellen von auf einem pflanzlichen Fett basierten Impfkristallsuspensionen, insbesondere zur Erzeugung stabiler mikrodisperser Kakaobutterkristallsuspensionen mit einem hohen Anteil an Kakaobutter β_{VI}-Kristallen.

Beim erfindungsgemässen Verfahren wird in einem ersten Schritt ein Innenraum einer erfindungsgemässen Vorrichtung mit einer vordefinierten Menge einer flüssigen oder verflüssigten pflanzlichen Fettmasse befüllt. Insbesondere handelt es sich bei der Fettmasse um Kakaobutter. In einem zweiten Schritt erfolgt eine zwei- oder mehrstufige thermische Konditionierung der Fettmasse. Die Dauer sowie die Temperatur, auf welche der Behälter temperiert wird, kann dabei für jede Stufe vorbestimmt oder bestimmbar sein. Das Fett wird in mindestens einer der Stufen durch das Scherelement einer Scher- und/oder Dehnströmung ausgesetzt.

Die Dauer jeder der Stufen sowie die entsprechende Temperatur, auf die der Behälter temperiert werden muss, können dabei entweder durch einen Benutzer z.B. über eine Eingabevorrichtung bestimmt werden oder die entsprechenden Werte sind in einer Regeleinheit bereits vorgespeichert. Beispielsweise kann je nach Art des verwendeten pflanzlichen Fetts eine andere Anzahl an Konditionierungsstufen sowie unterschiedliche Temperaturverläufe und zeitliche Abläufe in einer Reglereinheit gespeichert sein.

Durch das erfindungsgemässe Verfahren lassen sich auch kleine Mengen an Impfkristallsuspensionen mit einem hohen Anteil an stabilen Kristallstrukturen der Kakaobutterkristalle herstellen.

Bevorzugt wird beim erfindungsgemässen Verfahren in einer ersten Stufe der Behälter für 15 Minuten auf 15°C temperiert. In einer zweiten Stufe wird die Temperatur des Behälters für 10 Minuten auf 22°C erhöht und anschliessend in einer dritten Stufe für 15 Minuten auf 26°C gehalten. In Kombination mit einer Scher-und/oder Dehnströmung der Fettmasse im Innenraum des Behälters lässt sich durch das erfindungsgemässe Verfahren besonders schnell eine Impfkristallsuspension mit einem Anteil an 50 - 100% von β_{VI}-Kakaobutterkristallen herstellen.

Besonders bevorzugt wird der Behälter anschliessend an die thermische Konditionierung für bis zu 24 Stunden, bevorzugt bis zu 12 Stunden, besonders bevorzugt bis zu 10 Stunden auf 30°C temperiert. Insbesondere kann während dieser Temperierung die im Innern des Behälters entstandene Impfkristallsuspension durch das Scherelement einer konstanten Scher- und/oder Dehnströmung ausgesetzt werden. Dies hat den Vorteil, dass eine hergestellte Impfkristallsuspension während eines Tages oder zumindest während mehrerer Stunden zur Animpfung einer Schokolade oder schokoladeähnlicher Masse verwendet werden kann.

Im Vergleich zu anderen bekannten Verfahren lässt sich durch das erfindungsgemässe Verfahren somit relativ schnell eine kleine Menge an einer Impfkristallsuspension herstellen, welche zudem während einer relativ langen Zeit zur Animpfung einer Schokolade oder schokoladenähnlichen Masse verwendet werden kann. Dies hat insbesondere im Schulungs- und Forschungsbetrieb sowie beim Einsatz in kleineren Betrieben wesentliche Vorteile.

Weitere Details und Ausführungsformen der vorliegenden Erfindung lassen sich aus der folgenden Beschreibung von Figuren und Beispielen entnehmen. Es zeigen:

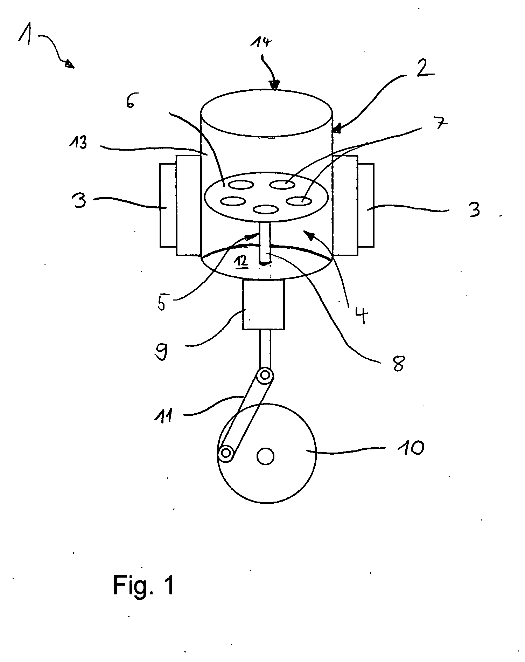

Figur 1: Eine schematische Darstellung des Aufbaus einer erfindungsgemässen Vorrichtung.

Die Figur 1 zeigt eine schematische Darstellung einer erfindungsgemässen Vorrichtung 1. Die Vorrichtung 1 verfügt über einen Behälter 2, welcher bei der gezeigten Ausführungsform als Zylinder ausgebildet ist. Der zylindrische Behälter 2 umfasst eine Grundfläche 12 sowie einen Zylindermantel 13. Die Grundfläche 12 sowie der Zylindermantel 13 sind dichtend miteinander verbunden. Ferner verfügt der zylinderförmige Behälter 2 über eine Deckfläche 14, welche verschliessbar ausgestaltet ist. Der Behälter 2 weist in seinem Inneren einen Innenraum 4 zur Aufnahme einer Fettmasse auf. Innerhalb des Innenraums 4 ist ein Scherelement 5 angeordnet. In der gezeigten Ausführungsform besteht das Scherelement 5 aus einer Platte 6 mit mehreren Öffnungen 7. Die Platte 6 ist in der axialen Richtung, in diesem Fall in Richtung der Symmetrieachse des zylinderförmigen Behälters 2 bewegbar angeordnet. Der Antrieb zur Bewegung der Platte 6 erfolgt über eine Kolbenstange 8 welche über eine Öffnung in der Grundfläche 12 des zylinderförmigen Behälters 2 geführt ist. Dabei ist eine Kolbendichtung 9 unterhalb der Deckfläche 12 angeordnet, welche das Ausfliessen der sich im Innenraum 4 des Behälters 2 befindlichen Fettmasse durch die Öffnung verhindert. Der Zylinderkolben 8 ist über ein Übertragungselement 11 mit einem rotierenden Elektromotor 10 verbunden. Alternativ könnte der Antrieb des Zylinderkolbens auch hydraulisch oder pneumatisch erfolgen. Der Motor könnte auch als magnetischer Getriebemotor ausgestaltet sein. Ferner verfügt die Vorrichtung 1 über zwei Temperierelemente 3, welche mit dem Behälter 2 thermisch verbunden sind. Die Temperierelemente 3 sind vorzugsweise Peltier-Elemente.

## Patentansprüche

1. Vorrichtung zum batchweisen Herstellen von auf einem pflanzlichen Fett basierten Impfkristallsuspensionen, insbesondere zur Erzeugung stabiler mikrodisperser Kakaobutterkristallsuspensionen mit Anteil an Kakaobutter β_{VI} Kristallen von über 40% vom Gesamtkristallgehalt der Fettmasse, bevorzugt von über 50%, insbesondere von über 60%, umfassend:
- einen vorzugsweise verschliessbaren Behälter (2) mit einem Innenraum (4) zur Aufnahme von Fettmasse;
- mindestens ein Temperierelement (3), insbesondere ein Peltier-Element zum Temperieren des Behälters (2) auf eine bestimmte oder bestimmbare Temperatur;
- wenigstens ein im Innenraum (4) angeordnetes Scherelement (5), welches zur Erzeugung einer Scher- und/oder Dehnströmung in der Fettmasse geeignet ist,
**dadurch gekennzeichnet, dass** das Scherelement (5) aus einer im Innenraum (4) entlang einer Achse bewegbaren Platte (6) mit mindestens einer Öffnung (7), insbesondere einer kreisrunden Öffnung (7), besteht.

2. Vorrichtung nach Anspruch 1, **dadurch gekennzeichnet, dass** der Behälter (2) einen Innenraum (4) mit einem Volumen von 0.1 bis 10 Litern, bevorzugt von 0.5 bis 5 Litern, besonders bevorzugt von 1 bis 2 Litern aufweist.

3. Vorrichtung nach einem der Ansprüche 1 oder 2, **dadurch gekennzeichnet, dass** der Behälter (2) zylinderförmig ist, wobei die Grundfläche (12) mit dem Mantel (13) des zylinderförmigen Behälters (2) dichtend verbunden ist und bevorzugt die Deckfläche (14) des zylinderförmigen Behälters (2) verschliessbar ist.

4. Vorrichtung nach einem der Ansprüche 1 bis 3, **dadurch gekennzeichnet, dass** der Behälter (2) aus einem wärmeleitfähigen Material besteht, bevorzugt aus rostfreiem Stahl oder Aluminium.

5. Vorrichtung nach einem der Ansprüche 1 bis 4, **dadurch gekennzeichnet, dass** die Vorrichtung (1) einen Antrieb aufweist (10,11), der geeignet ist, das Scherelement (5) anzutreiben.

6. Vorrichtung nach Anspruch 5, **dadurch gekennzeichnet, dass** die Geschwindigkeit des Antriebs (10,11) einstellbar ist, insbesondere stufenlos.

7. Vorrichtung nach einem der Ansprüche 1-6 , **dadurch gekennzeichnet, dass** die Platte (6) in einer Ebene, welche senkrecht zur Bewegungsrichtung steht, eine Form aufweiset, welche dem Querschnitt des Innenraums (4) in derselben Ebene entspricht.

8. Vorrichtung nach einem der Ansprüche 1 bis 7, **dadurch gekennzeichnet, dass** der Antrieb (10,11) derart ausgestaltet ist, dass die Platte (6) in der axialen Richtung in einer Hubbewegung vor und zurück bewegt werden kann.

9. Vorrichtung nach Anspruch 8, **dadurch gekennzeichnet, dass** die Platte (6) zusätzlich in eine Drehbewegung um die axiale Bewegungsrichtung versetzbar ist, bevorzugt durch einen zweiten Antrieb.

10. Vorrichtung nach einem der Ansprüche 1 bis 9, **dadurch gekennzeichnet, dass** die Vorrichtung (1) eine Regeleinheit aufweist, mit welcher die Temperatureinstellung des Temperierelements (3) und/oder die Stärke der Scher- und/oder Dehnströmung in der Fettmasse einstellbar sind.

11. Verfahren zum batchweisen Herstellen von auf einem pflanzlichen Fett basierten Impfkristallsuspensionen, insbesondere zur Erzeugung stabiler mikrodisperser Kakaobutterkristallsuspensionen mit hohem Anteil an Kakaobutter β_{VI} Kristallen, mit den Schritten:
- Befüllen eines Innenraums (4) einer Vorrichtung (1) nach einem der Ansprüche 1 bis 10 mit einer vordefinierten Menge einer flüssigen oder verflüssigten pflanzlichen Fettmasse, insbesondere Kakaobutter; und
- zwei- oder mehrstufige thermische Konditionierung des Fetts, wobei die Dauer jeder der Stufen einstellbar ist und der Behälter (2) in jeder der Stufen auf eine bestimmte oder bestimmbare Temperatur temperiert wird,
wobei die Fettmasse durch ein Scherelement (5) in mindestens einer der Stufen einer Scher- und/oder Dehnströmung ausgesetzt wird.

12. Verfahren nach Anspruch 11 **dadurch gekennzeichnet, dass** in einer ersten Stufe der Behälter (2) für 15 Minuten auf 15°C, in einer zweiten Stufe für 10 Minuten auf 22°C und in einer dritten Stufe für 15 Minuten auf 26°C temperiert wird.

13. Verfahren nach einem der Ansprüche 11 oder 12, **dadurch gekennzeichnet, dass** der Behälter (2) anschliessend an die thermische Konditionierung für bis zu 24 Stunden, bevorzugt bis zu 12 Stunden, besonders bevorzugt bis zu 10 Stunden auf 30°C temperiert wird, insbesondere wobei die im Innenraum (4) des Behälters entstandene Impfkristallsuspension durch das Scherelement (5) einer konstanten Scher- und/oder Dehnströmung ausgesetzt wird.

## Claims

1. Device for the batchwise production of seed crystal suspensions based on a vegetable fat, in particular for generating stable microdisperse cocoa butter crystal suspensions having a fraction of cocoa butter β_{VI} crystals of greater than 40% of the total crystal content of the fat mass, preferably greater than 50%, in particular greater than 60%, comprising:
- a preferably closable container (2) having an interior (4) for receiving fat mass;
- at least one tempering element (3), in particular a Peltier element for bringing the container (2) to and holding it at a defined or definable temperature;
- at least one shear element (5) arranged in the interior (4), which shear element is suitable for generating a shear flow and/or elongational flow in the fat mass,
**characterized in that** the shear element (5) consists of a plate (6), which is moveable along an axis in the interior (4), having at least one orifice (7), in particular a circular orifice (7).

2. Device according to Claim 1, **characterized in that** the container (2) has an interior (4) having a volume from 0.1 to 10 litres, preferably from 0.5 to 5 litres, particularly preferably from 1 to 2 litres.

3. Device according to either of Claims 1 and 2, **characterized in that** the container (2) is cylindrical, wherein the base (12) is joined to the shell (13) of the cylindrical container (2) in a sealing manner and preferably the top surface (14) of the cylindrical container (2) is closable.

4. Device according to any one of Claims 1 to 3, **characterized in that** the container (2) consists of a heat-conductive material, preferably of stainless steel or aluminium.

5. Device according to any one of Claims 1 to 4, **characterized in that** the device (1) has a drive (10, 11) which is suitable for driving the shear element (5).

6. Device according to Claim 5, **characterized in that** the speed of the drive (10, 11) is adjustable, in particular steplessly.

7. Device according to any one of Claims 1-6, **characterized in that** the plate (6), in a plane which is perpendicular to the direction of movement, has a shape which corresponds to the cross section of the interior (4) in the same plane.

8. Device according to any one of Claims 1 to 7, **characterized in that** the drive (10, 11) is configured in such a manner that the plate (6) can be moved in the axial direction to and fro in an up and down movement.

9. Device according to Claim 8, **characterized in that** the plate (6) is additionally adjustable in a rotary movement around the axial direction of movement, preferably by a second drive.

10. Device according to any one of Claims 1 to 9, **characterized in that** the device (1) has a control unit by means of which the temperature setting of the tempering element (3) and/or the strength of the shear flow and/or elongational flow in the fat mass can be adjusted.

11. Method for the batchwise production of seed crystal suspensions based on a vegetable fat, in particular for generating stable microdisperse cocoa butter crystal suspensions having a high fraction of cocoa butter β_{VI} crystals, having the steps:
- charging an interior (4) of a device (1) according to any one of Claims 1 to 10 with a predefined amount of a liquid or liquefied vegetable fat mass, in particular cocoa butter; and
- two- or multistage thermal conditioning of the fat, wherein the period of any of the stages is adjustable and the container (2) in any of these stages is brought to and maintained at a defined or definable temperature,
wherein the fat mass is exposed to a shear flow and/or elongational flow in at least one of the stages by a shear element (5).

12. Method according to Claim 11, **characterized in that** in a first stage the container (2) is brought to and maintained at 15°C for 15 minutes, in a second stage is brought to and maintained at 22°C for 10 minutes, and in a third stage is brought to and maintained at 26°C for 15 minutes.

13. Method according to either of Claims 11 and 12, **characterized in that** the container (2), subsequently to the thermal conditioning, is brought to and maintained at 30°C for up to 24 hours, preferably up to 12 hours, particularly preferably up to 10 hours, in particular wherein the seed crystal suspension that has formed in the interior (4) of the container is exposed to a constant shear flow and/or elongational flow by the shear element (5).

## Revendications

1. Dispositif de fabrication par lots de suspensions de cristaux germes à base de graisse végétale, en particulier pour produire des suspensions de cristaux de beurre de cacao microdispersées stables ayant une teneur en cristaux ß_{VI} de beurre de cacao de plus de 40% de la teneur en cristaux totale de la masse de graisse, de préférence de plus de 50%, en particulier de plus de 60%, comprenant :
- un récipient (2) pouvant être fermé de préférence, comprenant un espace intérieur (4) pour recevoir de la masse de graisse ;
- au moins un élément de mise en température (3), en particulier un élément Peltier pour la mise en température du récipient (2) à une température définie ou pouvant être définie ;
- au moins un élément de cisaillement (5) disposé dans l'espace intérieur (4) qui est approprié pour produire un écoulement de cisaillement et/ou d'allongement dans la masse de graisse,
**caractérisé en ce que** l'élément de cisaillement (5) est composé d'un plateau (6) mobile le long d'un axe dans l'espace intérieur (4) comprenant au moins une ouverture (7), en particulier une ouverture circulaire (7).

2. Dispositif selon la revendication 1, **caractérisé en ce que** le récipient (2) présente un espace intérieur (4) avec un volume de 0,1 à 10 litres, de préférence de 0,5 à 5 litres, en particulier de préférence de 1 à 2 litres.

3. Dispositif selon la revendication 1 ou 2, **caractérisé en ce que** le récipient (2) est cylindrique, sachant que la surface (12) est reliée de manière étanche à l'enveloppe (13) du récipient (2) cylindrique et de préférence la surface de coïncidence (14) du récipient (2) cylindrique peut être fermée.

4. Dispositif selon l'une des revendications 1 à 3, **caractérisé en ce que** le récipient (2) est en matériau à conductivité thermique, de préférence en acier inoxydable ou en aluminium.

5. Dispositif selon l'une des revendications 1 à 4, **caractérisé en ce que** le dispositif (1) présente un entraînement (10, 11) approprié pour entraîner l'élément de cisaillement (5).

6. Dispositif selon la revendication 5, **caractérisé en ce que** la vitesse de l'entraînement (10, 11) est réglable, en particulier en continu.

7. Dispositif selon l'une des revendications 1 à 6, **caractérisé en ce que** le plateau (6) présente dans un plan qui est perpendiculaire au sens de déplacement une forme qui correspond à la section transversale de l'espace intérieur (4) dans le même plan.

8. Dispositif selon l'une des revendications 1 à 7, **caractérisé en ce que** l'entraînement (10, 11) est ainsi conçu que le plateau (6) peut être déplacé d'avant en arrière dans un movement de levage dans le sens axial.

9. Dispositif selon la revendication 8, **caractérisé en ce que** le plateau (6) peut être décalé en plus dans un mouvement de rotation autour du sens de déplacement axial, de préférence par un deuxième entraînement.

10. Dispositif selon l'une des revendications 1 à 9, **caractérisé en ce que** le dispositif (1) présente une unité de régulation, permettant de régler le réglage de la température de l'élément de mise en température (3) et/ou la puissance de l'écoulement de cisaillement et/ou d'allongement dans la masse de graisse.

11. Procédé de fabrication par lots de suspensions de cristaux germes à base de graisse végétale, en particulier pour produire des suspensions de cristaux de beurre de cacao microdispersées stables ayant une teneur élevée en cristaux ß_{VI} de beurre de cacao, comprenant les étapes :
- de remplissage d'un espace intérieur (4) d'un dispositif (1) selon l'une des revendications 1 à 10 avec une quantité prédéfinie d'une masse de graisse végétale liquide ou fluidifiée, en particulier du beurre de cacao ; et
- de conditionnement thermique en deux ou plusieurs étapes de la graisse, sachant que la durée de chacune des étapes peut être réglée et le récipient (2), à chacune des étapes, est mis en température à une température définie ou pouvant être définie,
sachant que la masse de graisse est soumise à un écoulement de cisaillement et/ou d'allongement par un élément de cisaillement (5) dans au moins une des étapes.

12. Procédé selon la revendication 11, **caractérisé en ce que** dans une première étape, le récipient (2) est mis en température pendant 15 minutes à 15°C, dans une deuxième étape pendant 10 minutes à 22°C et dans une troisième étape pendant 15 minutes à 26°C.

13. Procédé selon la revendication 11 ou 12, **caractérisé en ce que** le récipient (2) est mis en température à la suite du conditionnement thermique pendant jusqu'à 24 heures, de préférence jusqu'à 12 heures, en particulier de préférence jusqu'à 10 heures à 30°C, en particulier sachant que la suspension de cristaux germes produite dans l'espace intérieur (4) du récipient est soumise à un écoulement de cisaillement et/ou d'allongement constant par l'élément de cisaillement (5).
